# EUROPÄISCHE PATENTSCHRIFT

(11) **EP 3 183 481 B1**
(45) Veröffentlichungstag und Bekanntmachung des Hinweises auf die Patenterteilung: **31.10.2018**
(21) Anmeldenummer: 15753050.2
(22) Anmeldetag: 21.08.2015
(51) Int. Cl.: F16J 15/3236, F16J 15/02, F16J 15/48

(54) **DICHTUNGSRING ZUM AXIALEN ABDICHTEN VON ZWEI AXIAL RELATIV ZUEINANDER BEWEGLICH ANGEORDNETEN TEILEN UND DICHTUNGSSYSTEM MIT DEM DICHTUNGSRING**
SEAL RING FOR AXIALLY SEALING TWO PARTS ARRANGED SO AS TO BE ABLE TO MOVE AXIALLY WITH RESPECT TO ONE ANOTHER, AND SEAL SYSTEM HAVING THE SEAL RING
BAGUE D'ÉTANCHÉITÉ PERMETTANT DE RENDRE ÉTANCHES AXIALEMENT DEUX PIÈCES AGENCÉES DE MANIÈRE MOBILE AXIALEMENT L'UNE PAR RAPPORT À L'AUTRE, ET SYSTÈME D'ÉTANCHÉITÉ MUNI DE LADITE BAGUE D'ÉTANCHÉITÉ

(30) Priorität: 22.08.2014 DE 102014112013
(43) Veröffentlichungstag der Anmeldung: 28.06.2017
(73) Patentinhaber: KNORR-BREMSE Systeme für Nutzfahrzeuge GmbH, 80809 München (DE)
(72) Erfinder: CSOMA, Zsigmond, H-2074 Perbal (HU); JAKAB, David, H-6000 Kecskemet (HU)
(86) Internationale Anmeldenummer: PCT/EP2015/069199
(87) Internationale Veröffentlichungsnummer: WO 2016/026949

(56) Entgegenhaltungen:
- DE-A1- 2 049 329
- DE-A1- 10 010 524
- FR-A- 985 320
- FR-A1- 2 820 191
- US-A- 373 256
- US-A- 2 204 507
- US-A1- 2004 150 168

## Beschreibung

Die vorliegende Erfindung bezieht sich auf einen Dichtungsring zum axialen Abdichten von zwei axial relativ zueinander beweglich angeordneten Teilen, auf ein Dichtungssystem mit zwei axial relativ zueinander beweglich angeordneten Teilen und axialer Abdichtung, auf ein Verfahren zum Herstellen eines Dichtungsrings zum axialen Abdichten von zwei axial relativ zueinander beweglich angeordneten Teilen und auf ein Verfahren zum Betreiben eines Dichtungssystems mit zwei axial relativ zueinander beweglich angeordneten Teilen und axialer Abdichtung.

Es sind Dichtungsringe, beispielsweise K-Ringe bzw. Ringe mit K-förmigem Profil, für Anwendungen zum radialen Abdichten von zueinander verschiebbaren Teilen bekannt. Die DE 103 27 777 A1 betrifft eine Dichtungsanordnung zum Abdichten zweier zueinander axial verschieblicher Teile zur radialen Dichtungsanwendung.

In der FR 985 320 A ist eine Armatur für eine Fluiddruckleitung mit einem Dichtungsring gezeigt. Die DE 20 49 329 A1 offenbart eine Kühlanlage mit einer Expansionskupplung und einem Körper, der mindestens zum Teil aus einem flexiblen Material besteht und durch Einleiten eines Druckmittels expandierbar ist. Die FR 2 820 191 A1 betrifft eine ringförmige Dichtung mit einem elastisch verformbaren, ringförmigen Dichtungskörper. In der US 373 256 A ist eine Kupplung mit einer Dichtung gezeigt. Die US 2 204 507 A offenbart einen Dichtungsring mit sich divergent erstreckenden Dichtlippen. Die US 2004/150168 A1 betrifft einen Dichtungsring mit Dichtmitteln am Innen- und Außenumfang.

Die DE 100 10 524 A1 offenbart ein Abstreifer mit integrierter Dichtung, wobei eine Dichtlippe eine Oberflächenstruktur mit einer Rauhigkeit Ra von größer 2 µm aufweist.

Es ist die Aufgabe der vorliegenden Erfindung, einen verbesserten Dichtungsring zum axialen Abdichten von zwei axial relativ zueinander beweglich angeordneten Teilen, ein verbessertes Dichtungssystem mit zwei axial relativ zueinander beweglich angeordneten Teilen und axialer Abdichtung, ein verbessertes Verfahren zum Herstellen eines Dichtungsrings zum axialen Abdichten von zwei axial relativ zueinander beweglich angeordneten Teilen und ein verbessertes Verfahren zum Betreiben eines Dichtungssystems mit zwei axial relativ zueinander beweglich angeordneten Teilen und axialer Abdichtung zu schaffen.

Diese Aufgabe wird durch einen Dichtungsring zum axialen Abdichten von zwei axial relativ zueinander beweglich angeordneten Teilen, ein Dichtungssystem mit zwei axial relativ zueinander beweglich angeordneten Teilen und axialer Abdichtung, ein Verfahren zum Herstellen eines Dichtungsrings zum axialen Abdichten von zwei axial relativ zueinander beweglich angeordneten Teilen und ein Verfahren zum Betreiben eines Dichtungssystems mit zwei axial relativ zueinander beweglich angeordneten Teilen und axialer Abdichtung gemäß den unabhängigen Ansprüchen gelöst.

Gemäß Ausführungsformen der vorliegenden Erfindung kann eine axiale Abdichtung erreicht werden, wobei insbesondere zwei Fluidvolumina voneinander abgedichtet werden können, von denen eines mit einem Überdruck beaufschlagt sein kann. Somit kann beispielsweise eine Seite eines Dichtungsrings mit Druck beaufschlagbar sein, um eine axiale Abdichtung zwischen Flächen zweier Teile zu erreichen, die eine axiale Relativbewegung bezüglich einander aufweisen können. Der Dichtungsring kann insbesondere als ein axialer K-Ring ausgeformt sein.

Vorteilhafterweise kann gemäß Ausführungsformen der vorliegenden Erfindung eine zuverlässige axiale Abdichtung erreicht werden, auch wenn die zwei Dichtoberflächen eine hohe Toleranz zueinander aufweisen. Ein axialer K-Ring als Dichtungsring bzw. Dichtelement kann technische und wirtschaftliche Vorzüge bieten, insbesondere auch bei Anwendungen, bei denen eine Toleranz eines Abstands zwischen zwei abzudichten Teilen für eine Verwendung eines O-Rings zu groß ist. Die technischen Vorzüge können beispielsweise beinhalten, dass eine axiale Abdichtung gemäß Ausführungsformen der vorliegenden Erfindung in einem nicht mit Druck beaufschlagten Zustand keine axiale Last auf die gegenüberliegenden, abzudichtenden Oberflächen der zwei Teile und in einem mit Druck beaufschlagten Zustand lediglich eine relativ geringe axiale Last auf dieselben ausübt. In der Gegenrichtung kann ferner auch eine Entlüftung durch die Dichtung ermöglicht werden. Die wirtschaftlichen Vorzüge können beispielsweise beinhalten, dass bestehende Teile, insbesondere im Fall einer Anwendung mit einem Rückschlagventil und einem Solenoid, ohne Modifikation verwendet werden können, insbesondere das Solenoid-Teil. Dabei kann beispielsweise auch darauf verzichtet werden, den Magnetkern ins Rückschlagventil einzutauchen, um die Teile mit radialer Dichtung abzudichten, oder eine Längentoleranz für die abzudichtenden Teile einzuengen. Auch kann die axiale Abdichtung gemäß Ausführungsformen der vorliegenden Erfindung beispielsweise generell bei Anwendungen zum Einsatz kommen, bei denen eine axiale Abdichtung bei Vorliegen einer relativ hohen Toleranz des Abstandes der zwei Teile zueinander sowie eines Überdrucks auf lediglich einer Seite erforderlich ist.

Ein Dichtungsring zum axialen Abdichten von zwei axial relativ zueinander beweglich angeordneten Teilen weist die folgenden Merkmale auf:
zwei Dichtlippen, die umlaufend an einer axial ersten Stirnseite des Dichtungsrings angeordnet sind, wobei die Dichtlippen ausgebildet sind, um durch einen ersten Fluiddruck eines ersten Fluidvolumens in eine abdichtende Anlage gegen einander gegenüberliegende Dichtflächen eines ersten der Teile voneinander abspreizbar zu sein; und
einen Abdichtvorsprung, der umlaufend an einer von der ersten Stirnseite axial abgewandten, zweiten Stirnseite des Dichtungsrings angeordnet ist, wobei der Abdichtvorsprung ausgebildet ist, um in einem gegen eine Dichtfläche eines zweiten der Teile anliegenden Zustand das erste Fluidvolumen in einem von dem Abdichtvorsprung radial einwärts angeordneten Bereich von einem zweiten Fluidvolumen mit einem zweiten Fluiddruck in einem von dem Abdichtvorsprung radial auswärts angeordneten Bereich abzudichten.

Das erste Teil kann beispielsweise ein Ventil, insbesondere ein Rückschlagventil und beispielsweise ein Doppelrückschlagventil aufweisen. Bei dem zweiten Teil kann es sich beispielsweise um ein Solenoid, einen Magnetkern, eine Magnetkernanordnung oder dergleichen handeln. Insbesondere kann der Dichtungsring in Verbindung mit einem Dichtungssystem bei einer Anwendung zur elektronischen Niveauregelung von beispielsweise einem Fahrzeuganhänger verwendet werden. Dabei kann mittels des Dichtungselements eine axiale Abdichtung insbesondere zwischen einem Doppelrückschlagventil und einem Magnetkernrohr bereitgestellt werden. Der Dichtungsring kann hierbei insbesondere als ein axialer K-Ring bzw. K-Ring zur axialen Abdichtung bzw. ein Dichtungsring mit K-förmigem Querschnittsprofil zur axialen Abdichtung ausgeformt sein. Der Dichtungsring kann ausgebildet sein, um das erste Fluidvolumen, das im Bereich der ersten Stirnseite sowie in einem von dem Abdichtvorsprung radial einwärts angeordneten Bereich der zweiten Stirnseite angeordnet sein kann, und das zweite Fluidvolumen in einem von dem Abdichtvorsprung radial auswärts angeordneten Bereich der zweiten Stirnseite voneinander abzudichten. Die zwei gegenüberliegenden bzw. parallelen Dichtflächen des ersten Teils können hierbei schräg oder normal bezüglich der Dichtfläche des zweiten Teils ausgerichtet sein. Der Abdichtvorsprung kann durch zwei zu dem Abdichtvorsprung hin geneigte Teilabschnitte der zweiten Stirnseite des Dichtungsrings ausgeformt sein.

Gemäß einer Ausführungsform kann der Dichtungsring ausgebildet sein, um bei Vorliegen eines Fluiddruckgradienten zwischen dem ersten Fluiddruck des ersten Fluidvolumens und dem zweiten Fluiddruck des zweiten Fluidvolumens, wobei der erste Fluiddruck größer als der zweite Fluiddruck ist, axial in Richtung von der ersten Stirnseite zu der zweiten Stirnseite mit dem Abdichtvorsprung in eine abdichtende Anlage gegen die Dichtfläche des zweiten Teils bewegbar zu sein. Hierbei können bei Vorliegen des Fluiddruckgradienten die Dichtlippen ausgebildet sein, um in eine abdichtende Anlage gegen die gegenüberliegenden Flächen des ersten Teils gedrückt zu werden. Eine solche Ausführungsform bietet den Vorteil, dass mittels der Druckdifferenz eine zuverlässige, bei Aufhebung oder Umkehr des Druckgradienten reversible Abdichtung erreicht werden kann.

Auch können die Dichtlippen ausgebildet sein, um zwischen einander in einem unmontierten Zustand des Dichtungsrings einen spitzen Ruheöffnungswinkel aufzuspannen. Hierbei kann der Ruheöffnungswinkel beispielsweise größer als 30 Grad sein, insbesondere 40 Grad oder mehr betragen und lediglich beispielhaft geringer als 70 Grad sein. Der Ruheöffnungswinkel kann alternativ auch ein stumpfer Winkel sein. Ferner können die Dichtlippen ausgebildet sein, um in einem montierten Zustand des Dichtungsrings einen Spreizwinkel aufzuspannen, der zumindest bei Abwesenheit des Fluiddruckgradienten kleiner als der Ruheöffnungswinkel ist. Eine solche Ausführungsform bietet den Vorteil, dass eine Dichtwirkung der Dichtlippen erhöht werden kann, da eine Abspreizung in eine abdichtende Anlage derselben gegen die Dichtflächen erleichtert ist.

Ferner ist der Dichtungsring aus einem elastischen Material mit einer ersten Oberflächenrauheit in einem ersten Oberflächenabschnitt, der den Abdichtvorsprung und Abdichtkanten umfassende Endabschnitte der Dichtlippen aufweist, und mit einer zweiten Oberflächenrauheit in einem zweiten Oberflächenabschnitt außerhalb des ersten Oberflächenabschnitts ausgeformt, wobei die erste Oberflächenrauheit geringer als die zweite Oberflächenrauheit ist. Das elastische Material kann hierbei ein Kunststoffmaterial sein. Dabei kann die Oberflächenrauheit durch einen Mittenrauwert angegeben bzw. gekennzeichnet sein. Somit können der Abdichtvorsprung und die Abdichtkanten umfassenden Endabschnitte der Dichtlippen eine geringere Oberflächenrauheit als eine restliche Oberfläche des Dichtungsrings aufweisen. Eine solche Ausführungsform bietet den Vorteil, dass eine Dichtwirkung des Dichtungsrings gegen die Dichtflächen erhöht und noch zuverlässiger gemacht werden kann.

Ein Dichtungssystem mit zwei axial relativ zueinander beweglich angeordneten Teilen und axialer Abdichtung weist folgende Merkmale auf:
ein erstes Teil, in dem eine ringförmige Nut mit einander gegenüberliegenden Dichtflächen ausgeformt ist;
ein zweites Teil mit einer Dichtfläche, wobei das erste Teil und das zweite Teil relativ zueinander entlang einer gemeinsamen axialen Achse beweglich angeordnet sind; und
eine Ausführungsform des vorstehend genannten Dichtungsrings, wobei zumindest die Dichtlippen des Dichtungsrings in der Nut des ersten Teils und der Abdichtvorsprung des Dichtungsrings angrenzend an der Dichtfläche des zweiten Teils anordenbar oder angeordnet sind.

In Verbindung mit dem Dichtungssystem kann eine Ausführungsform des vorstehend genannten Dichtungsrings vorteilhaft verwendet werden, um eine axiale Abdichtung zwischen den Teilen bzw. den Fluidvolumina zu bewirken.

Gemäß einem Ausführungsbeispiel kann zumindest eine Durchgangsöffnung vorgesehen sein, die in dem ersten Teil zwischen der Nut und einer Kammer ausgeformt ist, die mit dem ersten Fluiddruck des ersten Fluidvolumens beaufschlagbar ist. Die zumindest eine Durchgangsöffnung kann hierbei eine Strömungsverbindung zwischen der Kammer und der Nut repräsentieren. Die zumindest eine Durchgangsöffnung kann dabei in einen Oberflächenabschnitt der Nut münden, der von den gegenüberliegenden Dichtflächen der Nut getrennt bzw. beabstandet angeordnet ist. Eine solche Ausführungsform bietet den Vorteil, dass der erste Fluiddruck zum Bewegen des Dichtungsrings in axialer Richtung zu dem zweiten Teil hin genutzt werden kann, um den Abdichtvorsprung in eine zuverlässig abdichtende Anlage gegen die Dichtfläche des zweiten Teils zu drücken.

Insbesondere kann das erste Teil ein Ventil sein und kann das zweite Teil ein Solenoid sein. Bei dem Ventil kann es sich um ein Rückschlagventil, insbesondere ein Doppelrückschlagventil handeln. Das Solenoid kann als ein Magnetkern, ein Magnetkernrohr oder dergleichen ausgeführt sein. Beispielsweise können das Ventil und das Solenoid für eine Niveauregelung eines Fahrzeuganhängers geeignet sein bzw. verwendet werden. Eine solche Ausführungsform bietet den Vorteil, dass insbesondere bei dem Solenoid keine baulichen Veränderungen notwendig sind bzw. bestehende Magnetkernanordnungen ohne Änderung verwendet werden können und somit Kosten eingespart werden, wenn der Dichtungsring gemäß Ausführungsformen der Erfindung eingesetzt wird.

Ein Verfahren zum Herstellen eines Dichtungsrings zum axialen Abdichten von zwei axial relativ zueinander beweglich angeordneten Teilen weist folgenden Schritt auf:
Ausformen des Dichtungsrings aus einem elastischen Material mit zwei Dichtlippen, die umlaufend an einer axial ersten Stirnseite des Dichtungsrings angeordnet sind, wobei die Dichtlippen ausgebildet sind, um durch einen ersten Fluiddruck eines ersten Fluidvolumens in eine abdichtende Anlage gegen einander gegenüberliegende Dichtflächen eines ersten der Teile voneinander abspreizbar zu sein, und mit einem Abdichtvorsprung, der umlaufend an einer von der ersten Stirnseite axial abgewandten, zweiten Stirnseite des Dichtungsrings angeordnet ist, wobei der Abdichtvorsprung ausgebildet ist, um in einem gegen eine Dichtfläche eines zweiten der Teile anliegenden Zustand das erste Fluidvolumen in einem von dem Abdichtvorsprung radial einwärts angeordneten Bereich von einem zweiten Fluidvolumen in einem von dem Abdichtvorsprung radial auswärts angeordneten Bereich abzudichten.

Durch Ausführen des Verfahrens zum Herstellen kann eine Ausführungsform des vorstehend genannten Dichtungsrings vorteilhaft hergestellt werden. Der Schritt des Ausformens kann hierbei ein Urformprozess sein.

Dabei kann im Schritt des Ausformens der Dichtungsring mit einer ersten Oberflächenrauheit in einem ersten Oberflächenabschnitt, der den Abdichtvorsprung und Abdichtkanten umfassende Endabschnitte der Dichtlippen aufweist, und einer zweiten Oberflächenrauheit in einem zweiten Oberflächenabschnitt außerhalb des ersten Oberflächenabschnitts ausgeformt werden, wobei die erste Oberflächenrauheit geringer als die zweite Oberflächenrauheit ist. Hierbei kann der erste Oberflächenabschnitt und gegebenenfalls zusätzlich der zweite Oberflächenabschnitt insbesondere in einem Anlieferungszustand bzw. Rohzustand belassen und zusätzlich oder alternativ ohne Material abtrennendes Verfahren bearbeitet sein. Eine solche Ausführungsform bietet den Vorteil, dass bei einem Ausformen oder Urformen des Dichtungsrings bereits geeignete Oberflächenrauheitswerte einstellbar sein können, sodass weitere Bearbeitungsschritte, insbesondere Materialtrennschritte entfallen können.

Ein Verfahren zum Betreiben eines Dichtungssystems mit zwei axial relativ zueinander beweglich angeordneten Teilen und axialer Abdichtung weist folgende Schritte auf:
Bereitstellen einer Ausführungsform des vorstehend genannten Dichtungssystems; und
Anlegen des ersten Fluiddrucks im Bereich des ersten Teils, um die Dichtlippen des Dichtungsrings in die abdichtende Anlage gegen die einander gegenüberliegenden Dichtflächen der Nut des ersten Teils abzuspreizen und den Dichtungsring axial in Richtung von der ersten Stirnseite zu der zweiten Stirnseite mit dem Abdichtvorsprung in eine abdichtende Anlage gegen die Dichtfläche des zweiten Teils zu bewegen, um das erste Fluidvolumen und das zweite Fluidvolumen voneinander abzudichten.

Das Verfahren zum Betreiben kann unter Verwendung einer Ausführungsform des vorstehend genannten Dichtungssystems vorteilhaft ausgeführt werden, um das erste Teil und das zweite Teil bzw. die Fluidvolumina bezüglich einander abzudichten.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Schnittdarstellung eines Dichtungssystems gemäß einem Ausführungsbeispiel der vorliegenden Erfindung;
- Fig. 2: eine Teilschnittdarstellung eines Dichtungsrings gemäß einem Ausführungsbeispiel der vorliegenden Erfindung;
- Fig. 3: ein Ablaufdiagramm eines Verfahrens zum Herstellen eines Dichtungsrings, gemäß einem Ausführungsbeispiel der vorliegenden Erfindung; und
- Fig. 4: ein Ablaufdiagramm eines Verfahrens zum Betreiben eines Dichtungssystems, gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

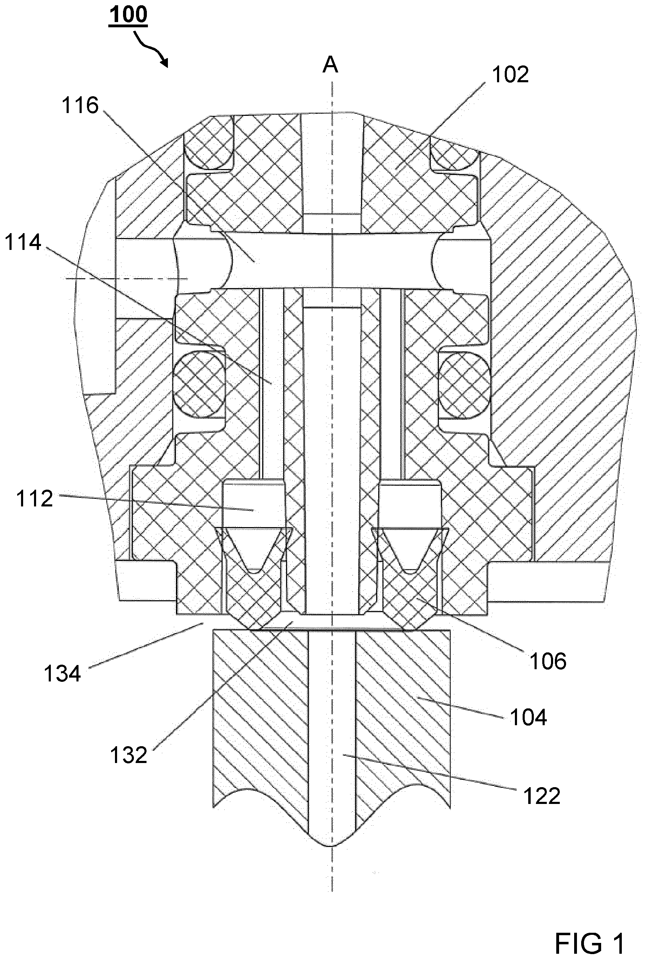

Fig. 1 zeigt eine Schnittdarstellung eines Dichtungssystems 100 gemäß einem Ausführungsbeispiel der vorliegenden Erfindung. Dabei ist das Dichtungssystem 100 gemäß dem in Fig. 1 dargestellten Ausführungsbeispiel der vorliegenden Erfindung für eine Anwendung in Verbindung mit einer elektronischen Niveauregelung (ELC = Electronic Level Control) für einen Anhänger eines Fahrzeugs, beispielsweise eines Lastkraftwagens oder anderen Nutzfahrzeugs vorgesehen. Das Dichtungssystem 100 weist eine Haupterstreckungsachse A auf.

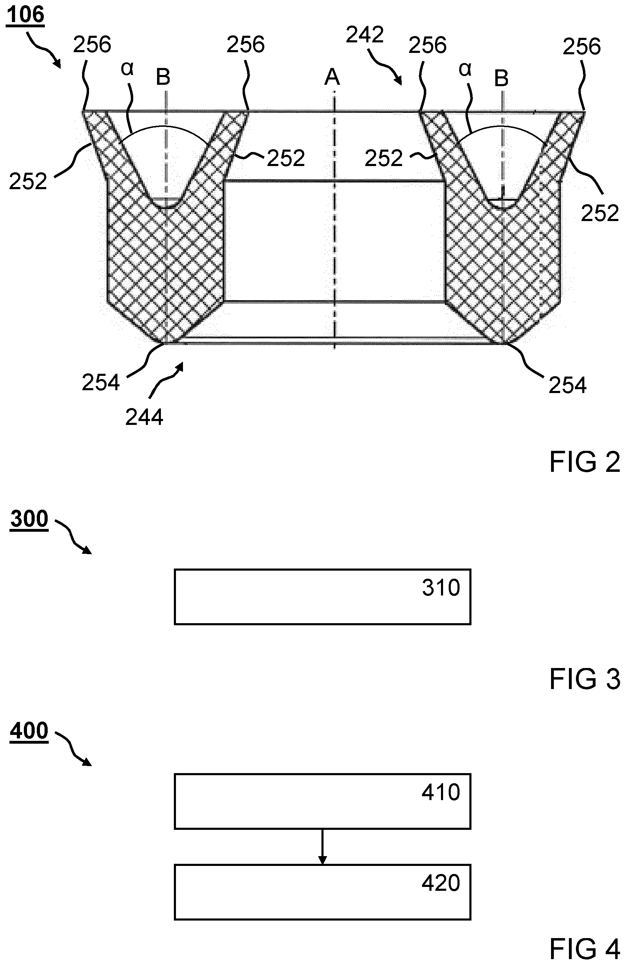

Das Dichtungssystem 100 weist ein erstes Teil 102 und ein zweites Teil 104 auf, die axial relativ zueinander beweglich angeordnet sind. Gemäß dem in Fig. 1 dargestellten Ausführungsbeispiel der vorliegenden Erfindung ist das erste Teil 102 ein Ventil, genauer gesagt ein Doppelrückschlagventil, und ist das zweite Teil 104 ein Solenoid, genauer gesagt ein Magnetkernrohr. Dabei weisen das Doppelrückschlagventil und das Magnetkernrohr, d. h. das erste Teil 102 und das zweite Teil 104, eine axiale Toleranz bezüglich einander entlang der Haupterstreckungsachse A auf. Zur axialen Abdichtung zwischen dem ersten Teil 102 und dem zweiten Teil 104 weist das Dichtungssystem 100 ferner einen Dichtungsring 106 auf. Dabei ist der Dichtungsring 106 zwischen dem ersten Teil 102 und dem zweiten Teil 104 angeordnet. Der Dichtungsring 106 ist ausgebildet, um eine axiale Abdichtung für das erste Teil 102 und das zweite Teil 104 bereitzustellen, die axial relativ zueinander beweglich angeordnet sind. Auf den Dichtungsring 106 wird nachfolgend und unter Bezugnahme auf Fig. 2 noch weiter eingegangen.

Das erste Teil 102 bzw. das Doppelrückschlagventil weist eine ringförmige Nut 112 bzw. Vertiefung auf. Die Nut 112 ist hierbei in einer dem zweiten Teil 104 zugewandten Seite des ersten Teils 102 ausgeformt. Dabei weist die Nut 112 einander gegenüberliegende Dichtflächen auf. In der Nut 112 ist der Dichtungsring 106 zumindest teilweise aufgenommen angeordnet. Hierbei sind zwei Dichtlippen des Dichtungsrings 106 in Anlage gegen die Dichtflächen der Nut 112 angeordnet. Ein Abdichtvorsprung des Dichtungsrings 106 steht aus der Nut 112 in Richtung zu dem zweiten Teil 104 hin vor.

Gemäß dem in Fig. 1 dargestellten Ausführungsbeispiel der vorliegenden Erfindung sind in dem ersten Teil 102 zumindest eine Durchgangsöffnung 114 bzw. Strömungsverbindung und eine Kammer 116 ausgeformt. Die zumindest eine Durchgangsöffnung 114 erstreckt sich in dem ersten Teil 102 zwischen der Nut 112 und der Kammer 116. Genau gesagt ist die zumindest eine Durchgangsöffnung 114 zwischen einer Endfläche auf einem Grund der Nut 112 und der Kammer 116 ausgeformt. Die zumindest eine Durchgangsöffnung 114 ist zwischen der Nut 112 und der Kammer 116 angeordnet. Insbesondere weist die zumindest eine Durchgangsöffnung 114 eine Längserstreckungsachse auf, die innerhalb von Fertigungstoleranzen parallel zu der Haupterstreckungsachse A ist.

Das zweite Teil 104 bzw. das Magnetkernrohr weist eine Dichtfläche auf, die dem ersten Teil 102 zugewandt ist. Der Abdichtvorsprung des Dichtungsrings 106 ist in Anlage gegen die Dichtfläche des zweiten Teils 104 angeordnet. Gemäß dem in Fig. 1 dargestellten Ausführungsbeispiel der vorliegenden Erfindung weist das zweite Teil 104 eine Bohrung 122 entlang der Haupterstreckungsachse A auf. Auch wenn es in Fig. 1 nicht explizit bezeichnet ist, so weist das erste Teil 102 eine axiale Bohrung entlang der Haupterstreckungsachse A auf. In dem ersten Teil 102 ist die axiale Bohrung radial einwärts bezüglich der Nut 112 angeordnet. Mittels der axialen Bohrung ist in dem ersten Teil 102 eine Fluidverbindung zwischen der Kammer 116 und einer Oberfläche auf der dem zweiten Teil 104 zugewandten Seite eingerichtet.

Die Kammer 116 des ersten Teils 102 ist mit einem ersten Fluiddruck eines ersten Fluidvolumens beaufschlagbar. Somit liegt der erste Fluiddruck aufgrund der Durchgangsöffnung 114 auch in einem zwischen der Durchgangsöffnung 114 und dem Dichtungsring 106 angeordneten Teilabschnitt der Nut 112 vor. Die Dichtlippen des Dichtungsrings 106 sind ausgebildet, um durch den ersten Fluiddruck des ersten Fluidvolumens in eine abdichtende Anlage gegen die einander gegenüberliegenden Dichtflächen der Nut 112 voneinander abgespreizt zu werden. Der Dichtungsring 106 ist ausgebildet, um aufgrund des ersten Fluiddrucks in der Nut 112 in Richtung zu dem zweiten Teil 104 hin bewegt zu werden. Genauer gesagt ist der Dichtungsring 106 ausgebildet, um durch den ersten Fluiddruck mit dem Abdichtvorsprung in eine abdichtende Anlage gegen die Dichtfläche des zweiten Teils 104 bewegt zu werden.

Aufgrund der axialen Bohrung in dem ersten Teil 102 liegt in einem bezüglich des Abdichtvorsprungs des Dichtungsrings 106 radial einwärts angeordneten Innenbereich 132 zwischen dem ersten Teil 102 und dem zweiten Teil 104 der erste Fluiddruck vor. Somit umfasst das erste Fluidvolumen zumindest die Kammer 116, die zumindest eine Durchgangsöffnung 114, den Teilabschnitt der Nut 112, die axiale Bohrung in dem ersten Teil 102 und den Innenbereich 132. Wenn der Abdichtvorsprung des Dichtungsrings 106 in Anlage gegen die Dichtfläche des zweiten Teils 104 angeordnet ist, so ist der Abdichtvorsprung ausgebildet, um das erste Fluidvolumen in dem Innenbereich 132 von einem zweiten Fluidvolumen mit einem zweiten Fluiddruck in einem von dem Abdichtvorsprung radial auswärts angeordneten Außenbereich 134 abzudichten. Der zweite Fluiddruck ist hierbei geringer als der erste Fluiddruck.

Anders ausgedrückt umfasst das Dichtungssystem 100 insbesondere den Dichtungsring 106 bzw. einen elastischen Ring in der ringförmigen Nut 112. Der Dichtungsringe 106 weist einen Abdichtvorsprung auf einer Seite und zwei schmale, flexible Dichtlippen bzw. Lippen auf der anderen Seite auf. Die Dichtlippen enden in Abdichtkanten. Der Teilabschnitt der Nut 112 zwischen den flexiblen Lippen und der zumindest einen Durchgangsöffnung 114 weist eine Strömungsverbindung mit einer mit Druck beaufschlagten Seite des Dichtungssystems 100 auf. In einem mit Druck, d. h. dem ersten Fluiddruck, beaufschlagten Zustand dichten die Dichtlippen den Teilabschnitt der 112 ab und der Abdichtvorsprung wird gegen die Dichtfläche des zweiten Teils 104 gedrückt, wobei die mit Druck beaufschlagte Seite von einer nicht mit Druck beaufschlagten Seite des Dichtungssystems 100 abgedichtet wird.

Wenn ein Druck des ersten Fluidvolumens, d. h. der erste Fluiddruck, aus der Kammer 116 abgelassen wird, erfolgt eine Entlüftung in Richtung der Kammer 116, aber kann auch an dem Abdichtvorsprung des Dichtungsrings 106 vorbei in Richtung des Außenbereichs 134 bzw. der nicht mit Druck beaufschlagten Seite des Dichtungsrings 106 gelangen. In einem nicht mit Druck beaufschlagten Zustand besteht keine Abdichtung zwischen den zwei Komponenten bzw. Teilen 102 und 104, wobei insbesondere keine Dichtkraft und kein Kontakt zwischen dem Abdichtvorsprung des Dichtungsrings 106 und der Dichtfläche des zweiten Teils 104 besteht.

Fig. 2 zeigt eine Teilschnittdarstellung eines Dichtungsrings 106 gemäß einem Ausführungsbeispiel der vorliegenden Erfindung. Der Dichtungsring 106 ist zum axialen Abdichten von zwei axial relativ zueinander beweglich angeordneten Teilen ausgebildet. Bei dem Dichtungsring 106 handelt es sich um den Dichtungsring aus Fig. 1. Der Dichtungsring 106 ist aus einem elastischem Material, beispielsweise einem Kunststoffmaterial ausgeformt. Hierbei ist der Dichtungsring 106 in einem unmontierten Zustand gezeigt.

Der Dichtungsring 106 ist in der Darstellung von Fig. 2 so geschnitten gezeigt, dass die Haupterstreckungsachse A, die der Haupterstreckungsachse aus Fig. 1 entspricht, eine Hauptsymmetrieachse des Dichtungsrings 106 darstellt. Dabei sind zwei Schnittprofile eines Körpers des Dichtungsrings 106 gezeigt, die bezüglich der Haupterstreckungsachse A symmetrisch zueinander sind. Hierbei sind die beiden Schnittprofile bezüglich einander identisch, da der Körper des Dichtungsrings 106 gleichförmig ausgeformt ist. Jedes der beiden Schnittprofile weist eine Symmetrieachse B auf, die parallel zu der Haupterstreckungsachse A verläuft. Im Folgenden wird eine Morphologie des Dichtungsrings 106 mehrheitlich unter Bezugnahme auf eines der identischen Schnittprofile erläutert.

Der Dichtungsring 106 weist bezogen auf die Haupterstreckungsachse A eine erste Stirnseite 242 und eine von der ersten Stirnseite 242 abgewandte, zweite Stirnseite 244 auf. Hinsichtlich der Darstellung des Dichtungsrings106 in Fig. 1 ist die erste Stirnseite 242 der zumindest einen Durchgangsöffnung zugewandt und ist die zweite Stirnseite 244 der Dichtfläche des zweiten Teils zugewandt.

An der ersten Stirnseite 242 sind zwei Dichtlippen 252 des Dichtungsrings 106 ausgeformt bzw. angeordnet. Die Dichtlippen 252 sind an der ersten Stirnseite 242 um den Dichtungsring 106 umlaufend angeordnet. Gemäß dem in Fig. 1 dargestellten Ausführungsbeispiel der vorliegenden Erfindung weist ein die Dichtlippen 252 umfassender Teilabschnitt des Dichtungsrings 106 ein V-förmiges Querschnittsprofil auf. Dabei sind die Dichtlippen 252 ausgebildet, um aufgrund eines an der ersten Stirnseite 242 anlegbaren Fluiddrucks in eine abdichtende Anlage gegen lediglich beispielhaft die einander gegenüberliegenden Dichtflächen des ersten Teils aus Fig. 1 voneinander abspreizbar zu sein. Jede der Dichtlippen 252 weist an einem freien Endabschnitt auf einer bezüglich der Symmetrieachse B äußeren Seite eine Abdichtkante 256 auf. Insbesondere sind die Dichtlippen 252 ausgebildet, um zumindest mit den Abdichtkanten 256 in die abdichtende Anlage gegen die Dichtlippen abspreizbar zu sein.

An der zweiten Stirnseite 244 ist ein Abdichtvorsprung 254 des Dichtungsrings 106 ausgeformt bzw. angeordnet. Der Abdichtvorsprung 254 ist dabei an der zweiten Stirnseite 244 um den Dichtungsring 106 umlaufend angeordnet. Dabei ist der Abdichtvorsprung 254 zwischen zwei zu demselben hin geneigten Flanken bzw. Teilabschnitten der zweiten Stirnseite 244 angeordnet. Der Abdichtvorsprung 254 ist ausgebildet, um in eine abdichtende Anlage gegen lediglich beispielhaft die Dichtfläche des zweiten Teils aus Fig. 1 bewegbar zu sein, wenn der Dichtungsring aufgrund eines an der ersten Stirnseite 242 anlegbaren Fluiddrucks axial bzw. entlang der Haupterstreckungsachse A in Richtung von der ersten Stirnseite 242 zu der zweiten Stirnseite 244 bewegt wird.

Zwischen den Dichtlippen 252 und einem Ansatzpunkt der zu dem Abdichtvorsprung 254 hin geneigten Flanken der zweiten Stirnseite 244 weist der Dichtungsring 106 gemäß dem in Fig. 2 dargestellten Ausführungsbeispiel der vorliegenden Erfindung einen Mittelkörper mit entlang der Symmetrieachse B ausgerichteten Seitenoberflächen auf.

In der Darstellung von Fig. 2 ist erkennbar, dass die Dichtlippen 252 gemäß dem in Fig. 2 dargestellten Ausführungsbeispiel der vorliegenden Erfindung einen spitzen Ruheöffnungswinkel α zwischen einander aufspannen. Hierbei ist zwischen einander zugewandten Flanken der zwei Dichtlippen 252 ein innerer Ruheöffnungswinkel α aufgespannt und ist zwischen voneinander abgewandten Flanken der zwei Dichtlippen 252 ein äußerer Ruheöffnungswinkel aufgespannt, der in Fig. 2 nicht explizit bezeichnet ist. Hierbei ist der innere Ruheöffnungswinkel α größer als der äußere Ruheöffnungswinkel. Somit sind die Dichtlippen 252 zu den freien Endabschnitten derselben hin sich verjüngend ausgeformt. Insbesondere können der innere Ruheöffnungswinkel α und der äußere Ruheöffnungswinkel jeweils einen Wert von beispielsweise mehr als 30 Grad und beispielsweise weniger als 70 Grad aufweisen. Lediglich beispielhaft beträgt gemäß dem in Fig. 2 dargestellten Ausführungsbeispiel der vorliegenden Erfindung der innere Ruheöffnungswinkel α hierbei 54 Grad und beträgt der äußere Ruheöffnungswinkel 40 Grad.

Gemäß einem Ausführungsbeispiel der vorliegenden Erfindung ist der Dichtungsring 106 aus einem elastischen Material ausgeformt. Hierbei weist das elastische Material in einem ersten Oberflächenabschnitt, der zumindest den Abdichtvorsprung 254 und die Abdichtkanten 256 der Dichtlippen 252 aufweist, eine erste Oberflächenrauheit auf. In einem zweiten Oberflächenabschnitt außerhalb des ersten Oberflächenabschnitts bzw. in einem restlichen Oberflächenabschnitt weist das elastische Material eine zweite Oberflächenrauheit auf. Die erste Oberflächenrauheit ist dabei geringer als die zweite Oberflächenrauheit. Insbesondere kann die erste Oberflächenrauheit durch einen Mittenrauwert von beispielsweise 4 gekennzeichnet sein und kann die zweite Oberflächenrauheit durch einen Mittenrauwert von beispielsweise 10 gekennzeichnet sein. Dabei kann beispielsweise die gesamte Oberfläche oder zumindest der erste Oberflächenabschnitt des Dichtungsrings 106 in einem Anlieferungszustand bzw. Rohzustand belassen sein und zusätzlich oder alternativ ohne Material abtrennendes Verfahren bearbeitet sein.

Gemäß einem Ausführungsbeispiel kann der Abdichtvorsprung 254 von der Symmetrieachse B in Richtung der Haupterstreckungsachse A verschoben sein oder werden. In diesem Fall kann eine Dichtkraft erhöht sein bzw. werden. Wenn der Abdichtvorsprung 254 von der Haupterstreckungsachse A zu der Symmetrieachse B hin verschoben ist bzw. wird, dann kann die Dichtkraft verringert sein bzw. werden.

Fig. 3 zeigt ein Ablaufdiagramm eines Verfahrens 300 gemäß einem Ausführungsbeispiel der vorliegenden Erfindung. Das Verfahren 300 dient zum Herstellen eines Dichtungsrings zum axialen Abdichten von zwei axial relativ zueinander beweglich angeordneten Teilen. Durch Ausführen des Verfahrens 300 ist ein Dichtungsring wie der Dichtungsring aus Fig. 1 bzw. Fig. 2 herstellbar. Somit ist das Verfahren 300 geeignet, um einen Dichtungsring wie den Dichtungsring aus Fig. 1 bzw. Fig. 2 herzustellen.

Das Verfahren 300 weist einen Schritt 310 des Ausformens des Dichtungsrings aus einem elastischen Material mit zwei Dichtlippen und mit einem Abdichtvorsprung auf. Der Schritt 310 des Ausformens wird dabei so ausgeführt, dass die Dichtlippen umlaufend an einer axial ersten Stirnseite des Dichtungsrings angeordnet sind und ausgebildet sind, um durch einen ersten Fluiddruck eines ersten Fluidvolumens in eine abdichtende Anlage gegen einander gegenüberliegende Dichtflächen eines ersten der Teile voneinander abspreizbar zu sein. Ferner wird der Schritt 310 des Ausformens wird so ausgeführt, dass der Abdichtvorsprung umlaufend an einer von der ersten Stirnseite axial abgewandten, zweiten Stirnseite des Dichtungsrings angeordnet ist und ausgebildet ist, um in einem gegen eine Dichtfläche eines zweiten der Teile anliegenden Zustand das erste Fluidvolumen in einem von dem Abdichtvorsprung radial einwärts angeordneten Bereich von einem zweiten Fluidvolumen in einem von dem Abdichtvorsprung radial auswärts angeordneten Bereich abzudichten.

Gemäß einem Ausführungsbeispiel wird im Schritt 310 des Ausformens der Dichtungsring mit einer ersten Oberflächenrauheit in einem ersten Oberflächenabschnitt, der den Abdichtvorsprung und Abdichtkanten umfassende Endabschnitte der Dichtlippen aufweist, und einer zweiten Oberflächenrauheit in einem zweiten Oberflächenabschnitt außerhalb des ersten Oberflächenabschnitts ausgeformt, wobei die erste Oberflächenrauheit geringer als die zweite Oberflächenrauheit ist.

Fig. 4 zeigt ein Ablaufdiagramm eines Verfahrens 400 gemäß einem Ausführungsbeispiel der vorliegenden Erfindung. Das Verfahren 400 dient zum Betreiben eines Dichtungssystems mit zwei axial relativ zueinander beweglich angeordneten Teilen und axialer Abdichtung. Durch Ausführen des Verfahrens 400 ist ein Dichtungssystem wie das Dichtungssystem aus Fig. 1 betreibbar. Somit ist das Verfahren 400 geeignet, um ein Dichtungssystem wie das Dichtungssystem aus Fig. 1 zu betreiben.

Das Verfahren 400 weist einen Schritt 410 des Bereitstellens eines Dichtungssystems auf. Bei dem Dichtungssystem handelt es sich hierbei um das Dichtungssystem aus Fig. 1. Auch weist das Verfahren 400 einen Schritt 420 des Anlegens des ersten Fluiddrucks im Bereich des ersten Teils auf. Wenn im Schritt 420 des Anlegens der erste Fluiddruck im Bereich des ersten Teils angelegt ist, wird bewirkt, dass die Dichtlippen des Dichtungsrings in die abdichtende Anlage gegen die einander gegenüberliegenden Dichtflächen der Nut des ersten Teils abgespreizt werden. Ferner wird dadurch bewirkt, dass der Dichtungsring axial in Richtung von der ersten Stirnseite zu der zweiten Stirnseite mit dem Abdichtvorsprung in eine abdichtende Anlage gegen die Dichtfläche des zweiten Teils bewegt wird. Auf diese Weise sind das erste Fluidvolumen und das zweite Fluidvolumen voneinander abdichtbar.

Die beschriebenen Ausführungsbeispiele sind nur beispielhaft gewählt und können miteinander kombiniert werden.

### Bezugszeichenliste

- 100: Dichtungssystem
- 102: erstes Teil bzw. Doppelrückschlagventil
- 104: zweites Teil bzw. Magnetkernrohr
- 106: Dichtungsring
- 112: ringförmige Nut
- 114: Durchgangsöffnung bzw. Strömungsverbindung
- 116: Kammer
- 122: Bohrung
- 132: Innenbereich bzw. mit Druck beaufschlagter Bereich
- 134: Außenbereich bzw. nicht mit Druck beaufschlagter Bereich
- A: Haupterstreckungsachse
- 242: erste Stirnseite
- 244: zweite Stirnseite
- 252: Dichtlippe
- 254: Abdichtvorsprung
- 256: Abdichtkante
- B: Symmetrieachse
- α: Ruheöffnungswinkel
- 300: Verfahren zum Herstellen
- 310: Schritt des Ausformens
- 400: Verfahren zum Betreiben
- 410: Schritt des Bereitstellens
- 420: Schritt des Anlegens

## Patentansprüche

1. Dichtungsring (106) zum axialen Abdichten von zwei axial relativ zueinander beweglich angeordneten Teilen (102, 104), wobei der Dichtungsring (106) folgende Merkmale aufweist:
zwei Dichtlippen (252), die umlaufend an einer axial ersten Stirnseite (242) des Dichtungsrings (106) angeordnet sind, wobei die Dichtlippen (252) ausgebildet sind, um durch einen ersten Fluiddruck eines ersten Fluidvolumens in eine abdichtende Anlage gegen einander gegenüberliegende Dichtflächen eines ersten (102) der Teile voneinander abspreizbar zu sein; und
einen Abdichtvorsprung (254), der umlaufend an einer von der ersten Stirnseite (242) axial abgewandten, zweiten Stirnseite (244) des Dichtungsrings (106) angeordnet ist, wobei der Abdichtvorsprung (254) ausgebildet ist, um in einem gegen eine Dichtfläche eines zweiten (104) der Teile anliegenden Zustand das erste Fluidvolumen in einem von dem Abdichtvorsprung (254) radial einwärts angeordneten Bereich (132) von einem zweiten Fluidvolumen mit einem zweiten Fluiddruck in einem von dem Abdichtvorsprung (254) radial auswärts angeordneten Bereich (134) abzudichten,
wobei die zwei gegenüberliegenden Dichtflächen des ersten Teils (102) schräg oder normal bezüglich der Dichtfläche des zweiten Teils (104) ausgerichtet sind, wobei der Abdichtvorsprung (254) durch zwei zu dem Abdichtvorsprung (254) hin geneigte Teilabschnitte der zweiten Stirnseite (244) des Dichtungsrings (106) ausgeformt ist,
wobei der Dichtungsring (106) aus einem elastischen Material mit einer ersten Oberflächenrauheit in einem ersten Oberflächenabschnitt, der den Abdichtvorsprung (254) und Abdichtkanten (256) umfassende Endabschnitte der Dichtlippen (252) aufweist, und einer zweiten Oberflächenrauheit in einem zweiten Oberflächenabschnitt außerhalb des ersten Oberflächenabschnitts ausgeformt ist, wobei die erste Oberflächenrauheit geringer als die zweite Oberflächenrauheit ist.

2. Dichtungsring (106) gemäß Anspruch 1, wobei der Dichtungsring (106) ausgebildet ist, um bei Vorliegen eines Fluiddruckgradienten zwischen dem ersten Fluiddruck des ersten Fluidvolumens und dem zweiten Fluiddruck des zweiten Fluidvolumens axial in Richtung von der ersten Stirnseite (242) zu der zweiten Stirnseite (244) mit dem Abdichtvorsprung (254) in eine abdichtende Anlage gegen die Dichtfläche des zweiten Teils (104) bewegbar zu sein, wobei der erste Fluiddruck größer als der zweite Fluiddruck ist.

3. Dichtungsring (106) gemäß einem der vorangegangenen Ansprüche, bei dem die Dichtlippen (252) ausgebildet sind, um zwischen einander in einem unmontierten Zustand des Dichtungsrings (106) einen spitzen Ruheöffnungswinkel (α) aufzuspannen.

4. Dichtungssystem (100) mit zwei axial relativ zueinander beweglich angeordneten Teilen (102, 104) und axialer Abdichtung, wobei das Dichtungssystem (100) folgende Merkmale aufweist:
ein erstes Teil (102), in dem eine ringförmige Nut (112) mit einander gegenüberliegenden Dichtflächen ausgeformt ist;
ein zweites Teil (104) mit einer Dichtfläche, wobei das erste Teil (102) und das zweite Teil (104) relativ zueinander entlang einer gemeinsamen axialen Achse (A) beweglich angeordnet sind; und
einen Dichtungsring (106) gemäß einem der vorangegangenen Ansprüche, wobei zumindest die Dichtlippen (252) des Dichtungsrings (106) in der Nut (112) des ersten Teils (102) und der Abdichtvorsprung (254) des Dichtungsrings (106) angrenzend an die Dichtfläche des zweiten Teils (104) anordenbar oder angeordnet sind.

5. Dichtungssystem (100) gemäß Anspruch 4, mit zumindest einer Durchgangsöffnung (114), die in dem ersten Teil (102) zwischen der Nut (112) und einer Kammer (116) ausgeformt ist, die mit dem ersten Fluiddruck des ersten Fluidvolumens beaufschlagbar ist.

6. Dichtungssystem (100) gemäß einem der Ansprüche 4 bis 5, bei dem das erste Teil (102) ein Ventil ist und das zweite Teil (104) ein Solenoid ist.

7. Verfahren (300) zum Herstellen eines Dichtungsrings (106) zum axialen Abdichten von zwei axial relativ zueinander beweglich angeordneten Teilen (102, 104), wobei das Verfahren (300) folgenden Schritt aufweist:
Ausformen (310) des Dichtungsrings (106) aus einem elastischen Material mit zwei Dichtlippen (252), die umlaufend an einer axial ersten Stirnseite (242) des Dichtungsrings (106) angeordnet sind, wobei die Dichtlippen (252) ausgebildet sind, um durch einen ersten Fluiddruck eines ersten Fluidvolumens in eine abdichtende Anlage gegen einander gegenüberliegende Dichtflächen eines ersten (102) der Teile voneinander abspreizbar zu sein, und mit einem Abdichtvorsprung (254), der umlaufend an einer von der ersten Stirnseite (242) axial abgewandten, zweiten Stirnseite (244) des Dichtungsrings (106) angeordnet ist, wobei der Abdichtvorsprung (254) ausgebildet ist, um in einem gegen eine Dichtfläche eines zweiten (104) der Teile anliegenden Zustand das erste Fluidvolumen in einem von dem Abdichtvorsprung (254) radial einwärts angeordneten Bereich (132) von einem zweiten Fluidvolumen in einem von dem Abdichtvorsprung (254) radial auswärts angeordneten Bereich (134) abzudichten, wobei die zwei gegenüberliegenden Dichtflächen des ersten Teils (102) schräg oder normal bezüglich der Dichtfläche des zweiten Teils (104) ausgerichtet sind, wobei der Abdichtvorsprung (254) durch zwei zu dem Abdichtvorsprung (254) hin geneigte Teilabschnitte der zweiten Stirnseite (244) des Dichtungsrings (106) ausgeformt ist, wobei im Schritt (310) des Ausformens der Dichtungsring (106) mit einer ersten Oberflächenrauheit in einem ersten Oberflächenabschnitt, der den Abdichtvorsprung (254) und Abdichtkanten (256) umfassende Endabschnitte der Dichtlippen (252) aufweist, und einer zweiten Oberflächenrauheit in einem zweiten Oberflächenabschnitt außerhalb des ersten Oberflächenabschnitts ausgeformt wird, wobei die erste Oberflächenrauheit geringer als die zweite Oberflächenrauheit ist.

8. Verfahren (400) zum Betreiben eines Dichtungssystems (100) mit zwei axial relativ zueinander beweglich angeordneten Teilen (102, 104) und axialer Abdichtung, wobei das Verfahren (400) folgende Schritte aufweist:
Bereitstellen (410) eines Dichtungssystems (100) gemäß einem der Ansprüche 4 bis 6; und
Anlegen (420) des ersten Fluiddrucks im Bereich des ersten Teils (102), um die Dichtlippen (252) des Dichtungsrings (106) in die abdichtende Anlage gegen die einander gegenüberliegenden Dichtflächen der Nut (112) des ersten Teils abzuspreizen und den Dichtungsring (106) axial in Richtung von der ersten Stirnseite (242) zu der zweiten Stirnseite (244) mit dem Abdichtvorsprung (254) in eine abdichtende Anlage gegen die Dichtfläche des zweiten Teils (104) zu bewegen, um das erste Fluidvolumen und das zweite Fluidvolumen voneinander abzudichten.

## Claims

1. Seal ring (106) for axially sealing two parts (102, 104) arranged so as to be able to move axially with respect to one another, wherein the seal ring (106) has the following features:
two sealing lips (252), which are arranged circumferentially on an axial first end side (242) of the seal ring (106), wherein the sealing lips (252) are designed such that they can be spread apart from one another by a first fluid pressure of a first fluid volume to bear in a sealing manner against mutually opposing sealing faces of a first (102) of the parts; and
a sealing projection (254), which is arranged circumferentially on a second end side (244) of the seal ring (106), oriented axially away from the first end side (242), wherein the sealing projection (254) is designed in order, when in a state bearing against a sealing face of a second (104) of the parts, to seal the first fluid volume in a region (132) arranged radially inward with respect to the sealing projection (254) against a second fluid volume at a second fluid pressure in a region (134) arranged radially outward with respect to the sealing projection (254),
wherein the two opposing sealing faces of the first part (102) are oriented slanted or normal with respect to the sealing face of the second part (104), wherein the sealing projection (254) is formed by two partial portions of the second end side (244) of the sealing ring (106) which are sloping with respect to the sealing projection (254),
wherein the seal ring (106) is formed from an elastic material with a first surface roughness in a first surface portion, which comprises the end portions of the sealing lips (252) having the sealing projection (254) and sealing edges (256), and a second surface roughness in a second surface portion outside of the first surface portion, the first surface roughness being less than the second surface roughness.

2. Seal ring (106) according to Claim 1, wherein the seal ring (106) is designed such that, when a fluid pressure gradient is present between the first fluid pressure of the first fluid volume and the second fluid pressure of the second fluid volume, it can move axially in the direction from the first end side (242) toward the second end side (244) with the sealing projection (254) into a sealing position bearing against the sealing face of the second part (104), the first fluid pressure being greater than the second fluid pressure.

3. Seal ring (106) according to one of the preceding claims, wherein the sealing lips (252) are designed to subtend between them an acute resting opening angle (α) in a non-installed state of the seal ring (106).

4. Seal system (100) with two parts (102, 104) arranged so as to be able to move axially with respect to one another and axial sealing, wherein the seal system (100) has the following features:
a first part (102), in which an annular groove (112) is formed with mutually opposing sealing faces;
a second part (104) with a sealing face, wherein the first part (102) and the second part (104) are arranged able to move with respect to one another along a mutual axial axis (A); and
a seal ring (106) according to one of the preceding claims, wherein at least the sealing lips (252) of the seal ring (106) in the groove (112) of the first part (102) and the sealing projection (254) of the seal ring (106) are or can be arranged bordering on the sealing face of the second part (104).

5. Seal system (100) according to Claim 4, with at least one through opening (114), which is formed in the first part (102) between the groove (112) and a chamber (116) which can be subjected to the first fluid pressure of the first fluid volume.

6. Seal system (100) according to one of Claims 4 to 5, wherein the first part (102) is a valve and the second part (104) is a solenoid.

7. Method (300) for fabricating a seal ring (106) for axially sealing two parts (102, 104) arranged so as to be able to move axially with respect to one another, wherein the method (300) has the following step:
forming (310) the seal ring (106) from an elastic material with two sealing lips (252), arranged circumferentially on a first axial end side (242) of the seal ring (106), wherein the sealing lips (252) are designed such that they can be spread apart from one another by a first fluid pressure of a first fluid volume to bear in a sealing manner against mutually opposing sealing faces of a first (102) of the parts, and with a sealing projection (254), which is arranged circumferentially on a second end side (244) of the seal ring (106), oriented axially away from the first end side (242), wherein the sealing projection (254) is designed in order, when in a state bearing against a sealing face of a second (104) of the parts, to seal the first fluid volume in a region (132) arranged radially inward with respect to the sealing projection (254) against a second fluid volume in a region (134) arranged radially outward with respect to the sealing projection (254), wherein the two opposing sealing faces of the first part (102) are oriented slanted or normal with respect to the sealing face of the second part (104), wherein the sealing projection (254) is formed by two partial portions of the second end side (244) of the sealing ring (106) which are sloping with respect to the sealing projection (254), wherein in the step (310) of forming, the seal ring (106) is formed with a first surface roughness in a first surface portion, which comprises the end portions of the sealing lips (252) having the sealing projection (254) and sealing edges (256), and a second surface roughness in a second surface portion outside of the first surface portion, the first surface roughness being less than the second surface roughness.

8. Method (400) for operating a seal system (100) with two parts (102, 104) arranged so as to be able to move axially with respect to one another and axial sealing, wherein the method (400) has the following steps:
providing (410) a seal system (100) according to one of Claims 4 to 6; and
applying (420) the first fluid pressure in the region of the first part (102), in order to spread the sealing lips (252) of the seal ring (106) into the sealing position bearing against the mutually opposing sealing faces of the groove (112) of the first part and to move the seal ring (106) axially in the direction from the first end side (242) toward the second end side (244) with the sealing projection (254) into a sealing position bearing against the sealing face of the second part (104) in order to seal off the first fluid volume and the second fluid volume from each other.

## Revendications

1. Bague (106) d'étanchéité pour l'étanchéité axiale de deux pièces (102, 104) mobiles axialement l'une par rapport à l'autre, la bague (106) d'étanchéité ayant les caractéristiques suivantes :
deux lèvres (252) d'étanchéité, qui sont disposées, en faisant le tour, sur un premier côté (242) frontal axialement de la bague (106) d'étanchéité, les lèvres (252) d'étanchéité étant constituées pour être écartables l'une de l'autre par une première pression de fluide d'un premier volume de fluide dans une application donnant de l'étanchéité contre des surfaces d'étanchéité opposées l'une à l'autre d'une première (102) des pièces et
une saillie (254) d'étanchéité, qui est disposée, en faisant le tour, sur un deuxième côté (244) frontal, opposé axialement au premier côté (242) frontal, de la bague (106) d'étanchéité, la saillie (254) d'étanchéité étant constituée pour, dans un état appliquant une deuxième (104) des pièces contre une surface d'étanchéité, rendre étanche le premier volume de fluide dans une partie (132) disposée vers l'intérieur radialement de la saillie (254) d'étanchéité par rapport à un deuxième volume de fluide ayant une deuxième pression de fluide dans une partie (134) disposée vers l'extérieur radialement de la saillie (254) d'étanchéité,
dans laquelle les deux surfaces d'étanchéité opposées de la première pièce (102) sont obliques ou normales à la surface d'étanchéité de la deuxième pièce (104), la saillie (254) d'étanchéité étant formée par deux sous-parties inclinées vers la saillie (254) d'étanchéité, du deuxième côté (244) frontal de la bague (106) d'étanchéité,
dans laquelle la bague (106) d'étanchéité est en un matériau élastique ayant une première rugosité de surface dans une première partie de surface, qui a la saillie (254) d'étanchéité et des parties d'extrémité comprenant des bords (256) des lèvres (252) d'étanchéité, et une deuxième rugosité de surface dans une deuxième partie de surface à l'extérieur de la première partie de surface, la première rugosité de surface étant plus petite que la deuxième rugosité de surface.

2. Bague (106) d'étanchéité suivant la revendication 1, dans laquelle la bague (106) d'étanchéité est constituée pour, en présence d'un gradient de pression de fluide entre la première pression de fluide du premier volume de fluide et la deuxième pression de fluide du deuxième volume de fluide, être mobile axialement dans la direction allant du premier côté (242) frontal au deuxième côté (244) frontal avec la saillie (254) d'étanchéité en une application donnant de l'étanchéité contre la surface d'étanchéité de la deuxième pièce (104), la première pression de fluide étant plus grande que la deuxième pression de fluide.

3. Bague (106) d'étanchéité suivant l'une des revendications précédentes, dans laquelle les lèvres (252) d'étanchéité sont constituées pour faire entre elles, lorsque la bague (106) d'étanchéité est à l'état démonté, un angle (α) aigu d'ouverture de repos.

4. Système (100) d'étanchéité ayant deux pièces (102, 104) mobiles l'une par rapport à l'autre axialement et une étanchéité axiale, le système (100) d'étanchéité ayant les caractéristiques suivantes :
une première pièce (102), dans laquelle est formée une rainure (112) annulaire ayant des surfaces d'étanchéité opposées l'une à l'autre ;
une deuxième pièce (104) ayant une surface d'étanchéité, la première pièce (102) et la deuxième pièce (104) étant disposées mobiles relativement l'une à l'autre le long d'un axe (A) axial commun et
une bague (106) d'étanchéité suivant l'une des revendications précédentes, au moins les lèvres (252) d'étanchéité de la bague (106) d'étanchéité étant disposées dans la rainure (112) de la première pièce (102) et la saillie (254) d'étanchéité de la bague (106) d'étanchéité au voisinage de la surface d'étanchéité de la deuxième pièce (104) ou pouvant l'être.

5. Système (100) d'étanchéité suivant la revendication 4, comprenant au moins une ouverture (114) de traversée, qui est formée dans la première pièce (102) entre la rainure (112) et une chambre (116), qui peut être alimentée en la première pression de fluide du premier volume de fluide.

6. Système (100) d'étanchéité suivant l'une des revendications 4 à 5, dans lequel la première pièce (102) est une soupape et la deuxième pièce (104) est un solénoïde.

7. Procédé (300) de fabrication d'une bague (106) d'étanchéité pour l'étanchéité axiale de deux pièces (102, 104) montées mobiles l'une par rapport à l'autre axialement, le procédé (300) ayant les stades suivants :
on forme (310) la bague (106) d'étanchéité en une matière élastique avec deux lèvres (252) d'étanchéité, qui sont disposées, en faisant le tour, d'un premier côté (242) frontal axialement de la bague (106) d'étanchéité, les lèvres (252) d'étanchéité étant disposées pour être écartables l'une de l'autre par une première pression de fluide d'un premier volume de fluide dans une application donnant de l'étanchéité contre des surfaces d'étanchéité opposées l'une à l'autre d'une première (102) des pièces et comprenant une saillie (254) d'étanchéité, qui est disposée, en faisant le tour, sur un deuxième côté (244) frontal, opposé axialement au premier côté (242) frontal, de la bague (106) d'étanchéité, la saillie (254) d'étanchéité étant constituée pour, dans un état appliquant une deuxième (104) des pièces contre une surface d'étanchéité, rendre étanche le premier volume de fluide dans une partie (132) disposée vers l'intérieur radialement de la saillie (254) d'étanchéité par rapport à un deuxième volume de fluide ayant une deuxième pression de fluide dans une partie (134) disposée vers l'extérieur radialement de la saillie (254) d'étanchéité, les deux surfaces d'étanchéité opposées de la première pièce (102) sont obliques ou normales à la surface d'étanchéité de la deuxième pièce (104), la saillie (254) d'étanchéité étant formée par deux sous-parties inclinées vers la saillie (254) d'étanchéité, du deuxième côté (244) frontal de la bague (106), d'étanchéité, dans lequel dans le stade (310) de formation, la bague (106) d'étanchéité a une première rugosité de surface dans une première partie de surface, qui a la saillie (254) d'étanchéité et des parties d'extrémité comprenant des bords (256) des lèvres (252) d'étanchéité, et une deuxième rugosité de surface dans une deuxième partie de surface à l'extérieur de la première partie de surface, la première rugosité de surface étant plus petite que la deuxième rugosité de surface.

8. Procédé (400) pour faire fonctionner un système (100) d'étanchéité ayant deux pièces (102, 104) montées mobiles l'une par rapport à l'autre axialement et une étanchéité axiale, le procédé (400) ayant les stades suivants :
on se procure (410) un système (100) d'étanchéité suivant l'une des revendications 4 à 6 et
on applique la première, pression de fluide dans la région de la première pièce (102) pour écarter les lèvres (252) d'étanchéité de la bague (106) d'étanchéité dans la position donnant de l'étanchéité contre les surfaces d'étanchéité opposées mutuellement de la rainure (112) de la première pièce et pour déplacer la bague (106) d'étanchéité axialement dans la direction allant du premier côté (242) frontal au deuxième côté (244) frontal ayant la saillie (254) d'étanchéité en une application donnant de l'étanchéité contre la surface d'étanchéité de la deuxième pièce (104), afin de rendre étanche le premier volume de fluide et le deuxième volume de fluide l'un par rapport à l'autre.
